# EUROPÄISCHE PATENTSCHRIFT

(11) **EP 2 108 216 B1**
(45) Veröffentlichungstag und Bekanntmachung des Hinweises auf die Patenterteilung: **02.11.2016**
(21) Anmeldenummer: 08700849.6
(22) Anmeldetag: 09.01.2008
(51) Int. Cl.: H02P 7/28, H01H 9/06

(54) **ANSTEUEREINRICHTUNG FÜR EINEN ELEKTROMOTOR**
CONTROL DEVICE FOR AN ELECTRIC MOTOR
DISPOSITIF DE COMMANDE POUR MOTEUR ÉLECTRIQUE

(30) Priorität: 13.01.2007 DE 102007002013; 13.01.2007 DE 102007002012
(43) Veröffentlichungstag der Anmeldung: 14.10.2009
(73) Patentinhaber: Marquardt GmbH, 78604 Rietheim-Weilheim (DE)
(72) Erfinder: HAFEN, Daniel, 78595 Hausen o.V. (DE); BROGHAMMER, Peter, 78573 Wurmlingen (DE)
(74) Vertreter: Otten, Roth, Dobler & Partner mbB Patentanwälte
(86) Internationale Anmeldenummer: PCT/DE2008/000015
(87) Internationale Veröffentlichungsnummer: WO 2008/083667

(56) Entgegenhaltungen:
- EP-A- 0 489 343
- DE-A1- 10 241 868

## Beschreibung

Die Erfindung betrifft eine Einrichtung zur Ansteuerung eines Elektromotors nach dem Oberbegriff des Patentanspruchs 1.

Eine derartige Einrichtung wird vor allem in einem Elektrowerkzeug mit einem Elektromotor eingesetzt. Insbesondere kann es sich dabei um ein Akku-Elektrowerkzeug mit einem bürstenlosen Gleichstrom-Motor handeln.

Bei Elektrowerkzeugen ist es bekannt, die Schaltung zur Ansteuerung des Elektromotors auf einer Platine in der Art eines Elektronikmoduls im Gehäuse des Elektrowerkzeugs anzuordnen. Das Elektronikmodul umfaßt dabei eine Leistungsschaltung mit wenigstens einen Leistungshalbleiter, insbesondere zum steuerbaren Anlegen einer elektrischen Spannung an den Elektromotor, sowie eine Steuerschaltung zur Steuerung der Leistungsschaltung und/oder des Leistungshalbleiters, derart daß der Elektromotor mit einer einstellbaren Drehzahl, einem einstellbaren Drehmoment o, dgl, betreibbar ist. Weiter ist im Gehäuse des Elektrowerkzeugs ein Schaltmodul mit einem Betätigungsorgan, das manuell vom Benutzer verstellbar ist, zum Ein- und/oder Ausschalten der Steuerschaltung für den Betrieb des Elektromotors und/oder des Elektromotors angeordnet. Zusätzlich kann der Verstellweg des Betätigungsorgans als Vorgabe für die Drehzahl des Elektromotors dienen. Desweiteren kann im Elektrowerkzeug noch ein Umschalter für den Rechts-/Links-Lauf des Elektromotors angeordnet sein.

Als nachteilig hat sich dabei der mit der Verkabelung des Elektronikmoduls, des Leistungshalbleiters, des Schaltmoduls sowie gegebenenfalls des Umschalters einhergehende Aufwand herausgestellt. Aufgrund des beschränkten Einbauraums im Gehäuse des Elektrowerkzeugs ist die Unterbringung der Einrichtung oft erschwert. Weiterhin können die Leitungen auch Verfälschungen des mittels der Leistungshalbleiter geschalteten Motorstroms bewirken, so daß der Elektromotor fehlerhaft betrieben wird, was letztendlich Schäden und Ausfall des Elektrowerkzeugs hervorrufen kann.

Bei einer aus der EP 0 489 343 A2 bekannten Ansteuereinrichtung sind das Elektronikmodul sowie das Schaltmodul als jeweils separate Komponenten ausgestaltet. Das Elektronikmodul sowie das Schaltmodul sind weiterhin derart auf einem Träger angeordnet, daß das Elektronikmodul sowie das Schaltmodul zueinander positionierbar sind und eine Baugruppe bilden.

Bei einer anderen, aus der DE 102 41 868 A1 bekannten Ansteuereinrichtung weist das Schaltmodul einen Sollwertgeber auf, insbesondere um eine Drehzahleinstellung, eine Drehmomenteinstellung o. dgl. für den Elektromotor durch den Benutzer zu gestatten. Der Sollwertgeber erzeugt dann eine Sollwertvorgabe in Abhängigkeit von der Stellung des Betätigungsorgans. Die Sollwertvorgabe des Sollwertgebers besteht dabei in der Art einer digitalen Wegabfrage aus zur Stellung des Betätigungsorgans korrespondierenden Digitalwerten, was im Hinblick auf die einzuhaltenden Fertigungstoleranzen für den Sollwertgeber von Vorteil ist. Die Digitalwerte des Sollwertgebers werden dann der Steuerschaltung, insbesondere einem im Elektronikmodul befindlichen Mikroprozessor, einem Mikrocontroller o. dgl., zur weiteren Verarbeitung zugeführt.

Der Erfindung liegt die Aufgabe zugrunde, eine Einrichtung zur Ansteuerung eines Elektromotors zu schaffen, die kompakt ausgebildet ist und so auch in beschränkten Einbauräumen untergebracht werden kann. Insbesondere soll die Ansteuereinrichtung in einfacher Art und Weise an die Einbauräume in verschiedenen Elektrowerkzeugen anpaßbar sein. Insbesondere soll die Wegabfrage für das Betätigungsorgan sowie gegebenenfalls die Vorwahl des Rechts-/Links-Laufs des Elektromotors in einfacher Art und Weise sowie auf möglichst kleinem Bauraum in der Ansteuereinrichtung untergebracht sein.

Diese Aufgabe wird bei einer gattungsgemäßen Einrichtung zur Ansteuerung eines Elektromotors durch die kennzeichnenden Merkmale des Anspruchs 1 gelöst.

In platzsparender Bauweise umfaßt das Elektronikmodul bei der erfindungsgemäßen Ansteuereinrichtung zwei übereinander angeordnete Leiterplatten für die Steuerschaltung sowie für die Leistungsschaltung, wobei die beiden Leiterplatten mittels Abstandhalter paketartig angeordnet sind. Das Elektronikmodul sowie das Schaltmodul bilden eine zusammenhängende, kompakte Baugruppe. Somit ist eine Anpassung in einfacher Art und Weise an unterschiedliche Einbauräume im Elektrowerkzeug ermöglicht.

Weitere Ausgestaltungen der Erfindung sind Gegenstand der Unteransprüche.

Zwecks einfacher Montage kann der Träger eine Aufnahme für das Elektronikmodul aufweisen. Die Leiterplatte für die Steuerschaltung ist dem Träger zugewandt in der Aufnahme angeordnet, wobei die Steuerschaltung zum Schutz vor Beschädigungen in der Aufnahme mittels einer Vergußmasse vergossen werden kann. Weiterhin ist die Leiterplatte für die Leistungsschaltung dem Träger abgewandt in der Aufnahme angeordnet, wobei die Leistungsschaltung bevorzugterweise frei von Vergußmasse ist. Um eine gute Wärmeabfuhr der Verlustwärme zu gewährleisten, ist ein Kühlkörper an der Leistungsschaltung, und zwar insbesondere in wärmeleitendem Kontakt mit dem Leistungshalbleiter, angeordnet. Der einfachen Montage halber kann der Kühlkörper mittels einer elastischen Halteklammer am Träger befestigt sein.

In weiterer Ausgestaltung sind Bohrungen, Löcher, Durchbrüche o. dgl. am Träger zur Befestigung des Schaltmoduls angeordnet. Dadurch läßt sich das Schaltmodul in einfacher Art und Weise zum Elektronikmodul entsprechend den Gegebenheiten des jeweiligen Elektrowerkzeugs positionieren. Zweckmäßigerweise weist der Träger eine weitere Aufnahme für den Anschluß für die Spannungsversorgung auf. Handelt es sich bei dem Elektrowerkzeug um ein Akku-Elektrowerkzeug, so dient der elektrische Anschluß zur elektrischen Verbindung mit dem Akku, wobei der elektrische Anschluß in der Art eines Tulpenadapters, eines Steckadapters o. dgl. ausgestaltet sein kann. Dadurch ist auch der Anschluß zum Elektronikmodul und/oder zum Schaltmodul entsprechend dem Einbauraum im jeweiligen Elektrowerkzeug positionierbar. Der Anschluß steht dann mit dem Elektronikmodul und/oder dem Schaltmodul mittels Leitungen, Leiterbahnen o. dgl. in elektrischer Verbindung.

Beim digitalen Sollwertgeber handelt es sich um eine sehr kostengünstige Realisierung des Sollwertgebers für die Ansteuereinrichtung durch eine geringe Anzahl von Bauteilen, wobei lediglich ein geringer Bauraum für das komplette Schaltmodul erforderlich ist. In einer einfachen sowie preisgünstigen Ausgestaltung weist der digitale Sollwertgeber eine Leiterplatte mit zu den Digitalwerten der Sollwertvorgabe korrespondierenden Kontaktflächen auf. Mit dem Betätigungsorgan steht ein Schleifer, beispielsweise in Abhängigkeit von der Anzahl der Kontaktflächen ein 5-Finger-Schleifer, in Wirkverbindung, wobei der Schleifer die jeweiligen Kontaktflächen entsprechend der Stellung des Betätigungsorgans kontaktiert. Die jeweils kontaktierten Kontaktflächen codieren dann den für die Sollwertvorgabe dienenden Digitalwert. Es bietet sich dann weiter an, zwei weitere Kontaktflächen auf der Leiterplatte vorzusehen, die zur Erzeugung des Signals für die Rechts-/Links-Lauf-Funktion des Elektromotors dienen. Eine Kontaktbrücke, die mit einem vom Benutzer verstellbaren Umschalthebel am Schaltmodul in Wirkverbindung steht, kontaktiert die jeweilige weitere Kontaktfläche entsprechend der Rechts-/Links-Stellung.

In preisgünstiger Weise lassen sich noch Zusatzfunktionen in der Ansteuereinrichtung realisieren. So kann das Elektronikmodul eine Überwachungsschaltung zur Überwachung der Temperatur, des Stromes o. dgl. enthalten. Dadurch ist bei einer Übertemperatur, eines Überstromes o. dgl. der Betrieb des Elektromotors abschaltbar, so daß der Elektromotor vor Beschädigung geschützt ist. Zur Anzeige eines solchen Überlastfalles für den Benutzer kann ein am Elektrowerkzeug angebrachtes Leuchtmittel, wie eine LED, mit der Überwachungsschaltung in elektrischer Verbindung stehen.

Zusammenfassend läßt sich für besonders bevorzugte Ausgestaltungen einer EC-Steuerung, also als Ansteuereinrichtung für einen bürstenlosen, elektronisch kommutierten Gleichstrommotor, nachfolgendes bemerken.

Der Aufbau der EC-Steuerung wird aufgeteilt in die Komponenten Elektronik, Schaltmechanik und Akkuanschluß. Diese drei Komponenten können flexibel zueinander positioniert und auch separat verwendet werden. Trotz der flexiblen Anordnung bildet die EC-Steuerung eine zusammenhängende Baugruppe. Der Akkuanschluß ist über Leitungen mit der Elektronik im Gehäuse fest verbunden. Die Schaltmechanik kann über Positionierbohrungen, die sich auf einer Montageplatte am Gehäuse der Elektronik befinden, je nach Anwendung positioniert und fixiert werden. Die Schaltmechanik ist somit ebenfalls fest mit dem Rest der EC-Steuerung verbunden.

Die Wegabfrage für das Betätigungsorgan wird in der Art einer digitalen Wegabfrage realisiert. Ein beispielsweise als Fünf-Finger-Schleifer ausgebildeter Schleifer greift hier die einzelnen Positionen, die von Kontakt-Pads auf einer Leiterplatte gebildet werden, ab. Die Rechts-/Links-Funktion wird mit zwei Kontakt-Pads auf der Leiterplatte, die durch eine Druckfeder in der jeweiligen Stellung eines Rechts-Links-Umschalthebels überbrückt werden, realisiert. Die an den Kontakt-Pads abnehmbaren Signale werden von einem Mikrocontroller entsprechend verarbeitet.

Die mit der Erfindung erzielten Vorteile bestehen insbesondere darin, daß die Ansteuereinrichtung kompakt ausgebildet ist. Folglich benötigt die komplette Ansteuereinrichtung einen lediglich geringen Bauraum und ist daher auch in engen Einbauräumen der Griffschale von Elektrowerkzeugen unterzubringen. Die Ansteuereinrichtung besitzt einen flexiblen Aufbau, wodurch diese in verschiedene Elektrowerkzeuge einfach eingepaßt werden kann. Dennoch bildet die Ansteuereinrichtung eine fest verbundene sowie vormontierbare Baugruppe. Dadurch ergibt sich wiederum eine einfache Montage sowie eine Reduzierung des Verkabelungsaufwands im Elektrowerkzeug, da in der Ansteuereinrichtung ansonsten separat zu montierende Teile bereits zusammengefaßt sind. Weiterhin resultiert daraus auch eine erhebliche Kosteneinsparung für den Elektrowerkzeug-Hersteller. Falls gewünscht, können die Komponenten jedoch auch separat verwendet werden. Schließlich ist noch hervorzuheben, daß die erfindungsgemäße Ansteuereinrichtung eine höhere Betriebssicherheit als bisherige Einrichtungen aufweist, so daß diesbezüglichen Beschädigungen des Elektrowerkzeugs wirksam vorgebeugt ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: einen Schnitt durch ein Akku-Elektrowerkzeug,
- Fig. 2: die Ansteuereinrichtung aus Fig. 1 in perspektivischer Ansicht,
- Fig. 3: das Schaltmodul aus der Ansteuereinrichtung gemäß Fig. 2 als Einzelteil,
- Fig. 4: einen Querschnitt durch das Schaltmodul aus Fig. 3,
- Fig. 5: die im Schaltmodul befindliche Leiterplatte als Einzelteil,
- Fig. 6: die Ansteuereinrichtung wie in Fig. 2, wobei das Schaltmodul entfernt ist,
- Fig. 7: das Elektronikmodul aus der Ansteuereinrichtung gemäß Fig. 2 als Einzelteil und
- Fig. 8: schematisch die Schaltungsanordnung für die Ansteuerung des Elektromotors.

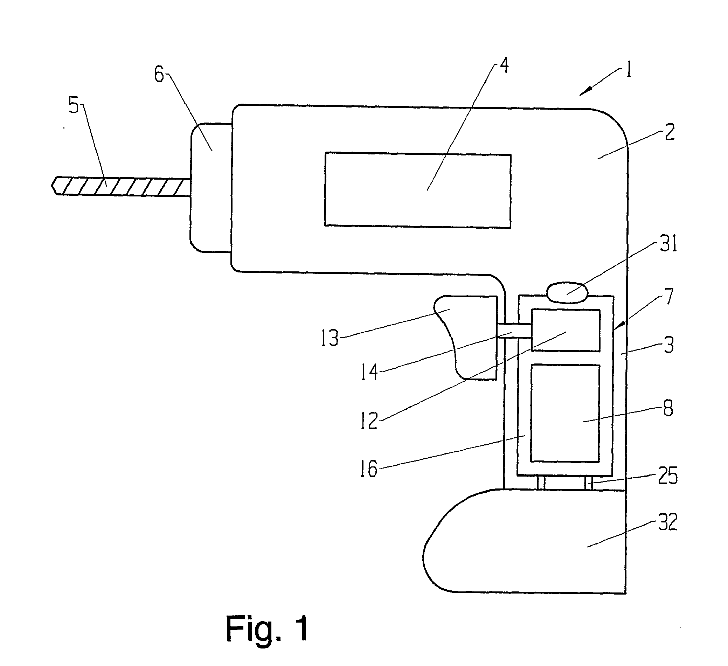

In Fig. 1 ist ein Elektrowerkzeug 1, bei dem es sich um eine Bohrmaschine, einen Bohrhammer, einen Schleifer, eine Säge, einen Hobel, einen Winkelschleifer o. dgl. handeln kann, schematisch gezeigt. Vorliegend handelt es sich bei dem Elektrowerkzeug 1 um eine Akku-Bohrmaschine. Das Elektrowerkzeug 1 besitzt ein Gehäuse 2 mit einem Handgriff 3. Im Gehäuse 2 befindet sich ein Elektromotor 4, der zum Antrieb eines in einer Werkzeugaufnahme 6 befindlichen Werkzeugs 5, wie eines Bohrers, dient. Beispielsweise kann es sich beim Elektromotor 4 um einen bürstenlosen Gleichstrommotor handeln, wobei der Elektromotor 4 mittels eines in den Handgriff 3 einsteckbaren, aufladbaren, aus einem Akku bestehenden Energiespeichers 32 mit elektrischer Energie versorgt wird.

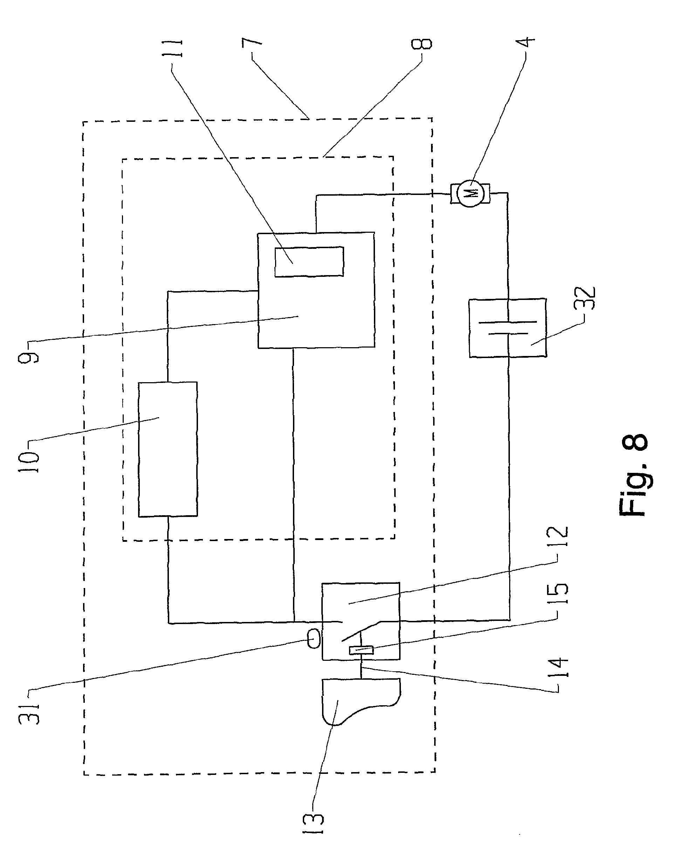

Im Gehäuse 2 befindet sich eine Einrichtung 7 zur Ansteuerung des Elektromotors 2. Die Ansteuereinrichtung 7 besitzt ein Elektronikmodul 8, das wiederum eine Leistungsschaltung 9 sowie eine Steuerschaltung 10 umfaßt, wie in Fig. 8 schematisch gezeigt ist. Die Leistungsschaltung 9 besitzt wenigstens einen Leistungshalbleiter 11 zum steuerbaren Anlegen einer elektrischen Spannung an den Elektromotor 4. Häufig sind in der Leistungsschaltung 9 mehrere Leistungshalbleiter 11 befindlich, beispielsweise sechs Leistungshalbleiter 11 bei einem bürstenlosen Gleichstrommotor. Die Steuerschaltung 10 dient zur Steuerung des Leistungshalbleiters 11, derart daß der Elektromotor 4 mit einer einstellbaren Drehzahl, einem einstellbaren Drehmoment o. dgl. betreibbar ist.

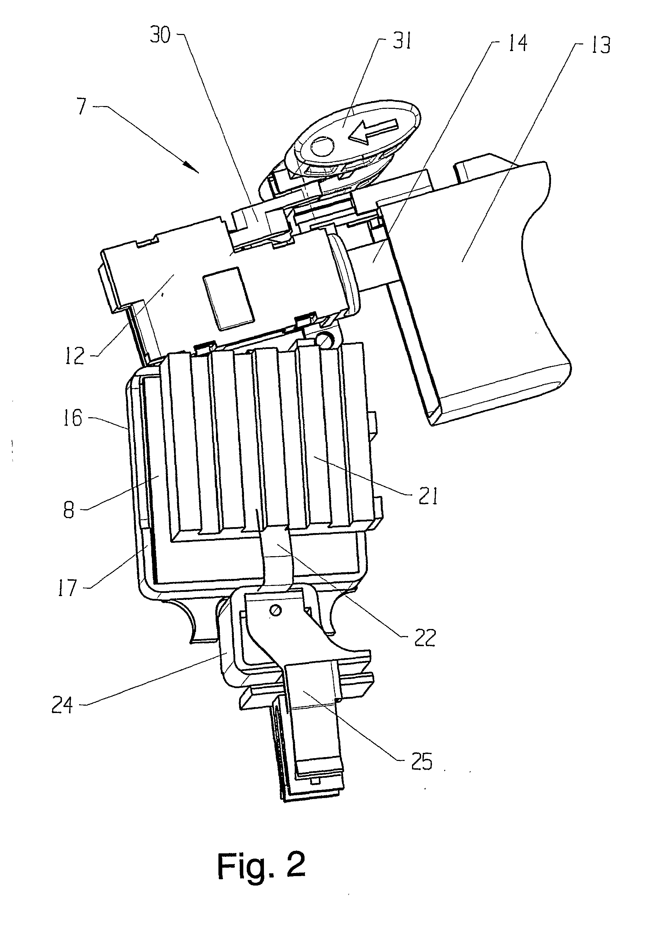

Die Steuereinrichtung 7 weist weiter ein Schaltmodul 12 in der Art einer Schaltmechanik auf, um dem Benutzer das Ein- und/oder Ausschalten des Betriebs für den Elektromotor 4 zu ermöglichen. Hierzu ragt aus dem Handgriff 3 ein vom Benutzer manuell bewegbares, verstellbares Betätigungsorgan 13 heraus, das über einen Stößel 14 auf das Schaltmodul 12 einwirkt. Wie man der in Fig. 2 als Einzelteil dargestellten Ansteuereinrichtung 7 entnimmt, sind das Elektronikmodul 8 sowie das Schaltmodul 12 als jeweils separate Komponenten ausgestaltet. Desweiteren sind das Elektronikmodul 8 sowie das Schaltmodul 12 auf einem Träger 16 angeordnet, derart daß das Elektronikmodul 8 sowie das Schaltmodul 12 zueinander zweckmäßig positioniert sind und eine zusammenhängende Baugruppe bilden.

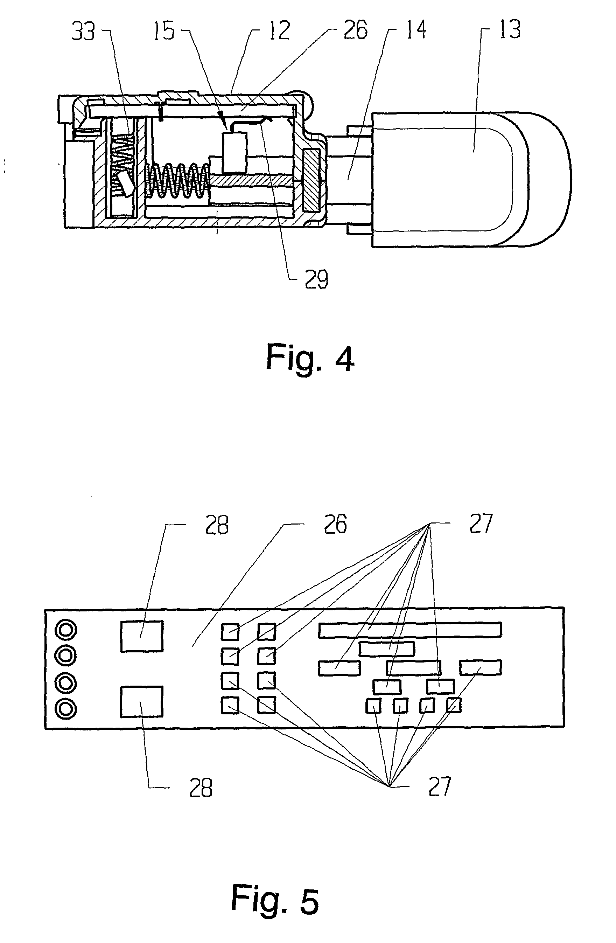

Damit die Drehzahl, das Drehmoment o. dgl. vom Benutzer des Elektrowerkzeugs 1 mittels des Betätigungsorgans 13 vorgebbar ist, enthält das Schaltmodul 12 einen in Fig. 4 sichtbaren Sollwertgeber 15. Der Sollwertgeber 15 erzeugt einen zur jeweiligen Wegstellung des Betätigungsorgans 13 korrespondierenden Wert als Sollwertvorgabe, der wiederum der Steuerschaltung 10 zur Drehzahleinstellung, zur Drehmomenteinstellung o. dgl. in Abhängigkeit von der Stellung des Betätigungsorgans 13 dient. Die Sollwertvorgabe des Sollwertgebers 15 besteht aus zur jeweiligen Stellung des Betätigungsorgans 13 korrespondierenden Digitalwerten in der Art einer digitalen Wegabfrage, wie man auch der nachfolgend noch näher erläuterten Fig. 5 entnimmt. Diese Digitalwerte des Sollwertgebers 15 werden dann einem Mikroprozessor, Mikrocontroller o. dgl. im Elektronikmodul 8 zur weiteren Verarbeitung zugeführt.

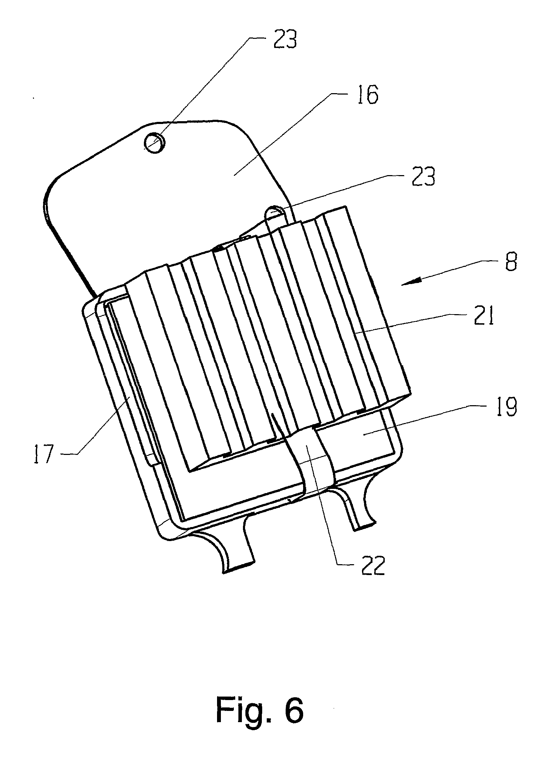

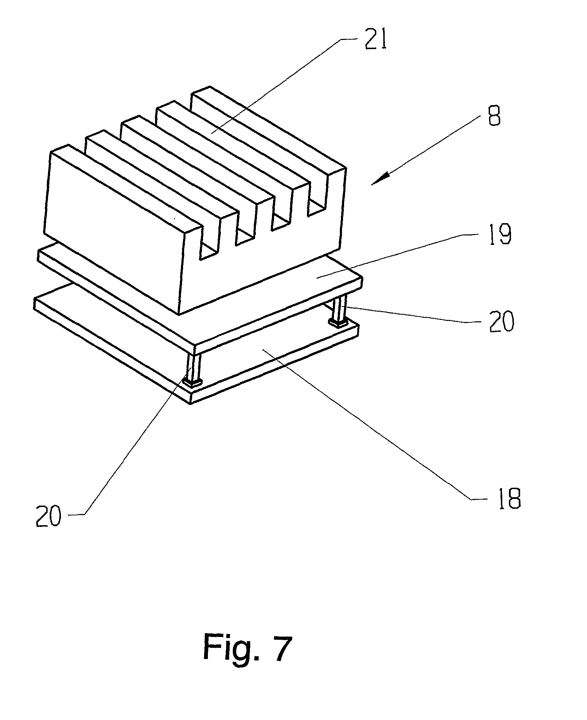

Wie in Fig. 7 zu sehen ist, umfaßt das Elektronikmodul 8 zwei paketartig angeordnete Leiterplatten 18, 19. Auf der einen Leiterplatte 18 befinden sich die elektrischen und/oder elektronischen Bauelemente für die Steuerschaltung 10. Auf der anderen Leiterplatte 19 befinden sich die elektrischen und/oder elektronischen Bauelemente für die Leistungsschaltung 9. Die beiden Leiterplatten 18, 19 sind mittels Abstandhalter 20 übereinander angeordnet. Der Träger 16 weist eine Aufnahme 17 auf, in der das Elektronikmodul 8 entsprechend Fig. 6 befindlich ist. Zweckmäßigerweise ist das Elektronikmodul 8 derart in der Aufnahme 17 angeordnet, daß die Leiterplatte 18 für die Steuerschaltung 10 dem Träger 16 zugewandt und die Leiterplatte 19 für die Leistungsschaltung 9 dem Träger 16 abgewandt ist. Die Aufnahme 17 besitzt einen etwas hochgezogenen Rand, so daß die Steuerschaltung 10 in der Aufnahme 17 mittels einer Vergußmasse vergießbar ist. Die Leistungsschaltung 9 hingegen ist frei von Vergußmasse. An der Leistungsschaltung 9 ist ein Kühlkörper 21 angeordnet, und zwar in wärmeleitendem Kontakt mit dem Leistungshalbleiter 11. Der Kühlkörper 21 ist mittels einer elastischen Halteklammer 22 am Träger 16 befestigt.

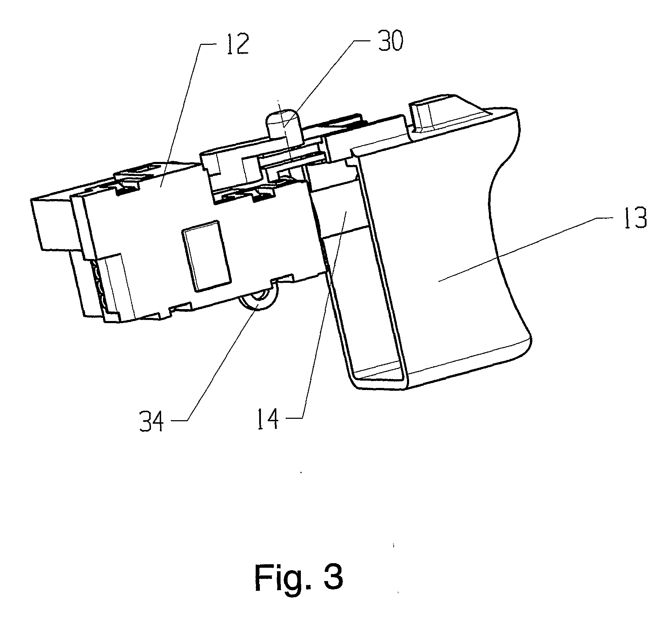

Wie man weiter der Fig. 6 entnimmt, sind Bohrungen 23, Löcher, Durchbrüche o. dgl. am Träger 16 zur Befestigung, beispielsweise durch Verschraubung, des Schaltmoduls 12 an in Fig. 3 sichtbaren Laschen 34 angeordnet. Mit Hilfe dieser Bohrungen 23 und Laschen 34 ist das Schaltmodul 12 zum Elektronikmodul 8 entsprechend den im Handgriff 3 verfügbaren Bauraum gemäß Fig. 2 positionierbar. Am Träger 16 befindet sich eine weitere Aufnahme 24, wie in Fig. 2 zu erkennen ist, in der der elektrische Anschluß 25 für die Spannungsversorgung befestigbar ist. Bei dem elektrischen Anschluß 25 kann es sich um den Anschluß zum Akku 32 handeln, wobei der Anschluß 25 beispielsweise in der Art eines Tulpenadapters, eines Steckadapters o. dgl. zum einfachen Wechsel des Akkus 32 ausgestaltet ist. Der Anschluß 25 ist wieder zum Elektronikmodul 8 und/oder dem Schaltmodul 12 entsprechend der Ausgestaltung im Gehäuse 2 positionierbar. Der elektrische Anschluß 25 steht mit dem Elektronikmodul 8 und/oder dem Schaltmodul 12 in elektrischer Verbindung.

Der Sollwertgeber 15 weist eine Leiterplatte 26 auf, welche in Fig. 5 näher gezeigt ist. Die Leiterplatte 26 besitzt zu den Digitalwerten der Sollwertvorgabe korrespondierende Kontaktflächen 27. Ein mit dem Betätigungsorgan 13 in Wirkverbindung stehender, in Fig. 4 sichtbarer Schleifer 29, bei dem es sich beispielsweise um einen 5-Finger-Schleifer handelt, kontaktiert die jeweiligen Kontaktflächen 27 entsprechend der Stellung des Betätigungsorgans 13. Der von den jeweiligen Kontaktflächen 27 erzeugte Digitalcode dient dann als entsprechende Sollwertvorgabe. Zwei weitere Kontaktflächen 28 auf der Leiterplatte 26 sind dazu vorgesehen, das Signal für die Rechts-/Links-Funktion des Elektromotors 4 zu erzeugen. Hierzu kontaktiert eine mit einem in Fig. 3 gezeigten Umschalthebel 30 am Schaltmodul 12 in Wirkverbindung stehende Kontaktbrücke 33, die gemäß Fig. 4 als Feder ausgebildet ist, die jeweilige weitere Kontaktfläche 28 entsprechend der Rechts-/Links-Stellung des Umschalthebels 30. Der Umschalthebel 30 wird seinerseits mittels eines in Fig. 2 sichtbaren Rechts-/Links-Schiebers 31 vom Benutzer bewegt.

Falls gewünscht kann das Elektronikmodul 8 eine nicht weiter gezeigte, an sich bekannte Überwachungsschaltung zur Überwachung der Temperatur, des Stromes o. dgl. enthalten. Dadurch ist bei einer Übertemperatur, eines Überstromes o. dgl. der Betrieb des Elektromotors 4 zur Vermeidung von Beschädigungen abschaltbar. Ein Leuchtmittel, wie eine Glühlampe, eine Leuchtdiode, LED o. dgl., kann zur Anzeige einer Übertemperatur, einer Unterspannung o. dgl. mit der Überwachungsschaltung in elektrischer Verbindung stehen, um so dem Benutzer den jeweiligen Zustand des Elektrowerkzeugs 1 zu visualisieren.

Die Erfindung ist nicht auf das beschriebene und dargestellte Ausführungsbeispiel beschränkt. Sie umfaßt vielmehr auch alle fachmännischen Weiterbildungen im Rahmen der durch die Patentansprüche definierten Erfindung. So kann die erfindungsgemäße Ansteuereinrichtung 7 nicht nur in Elektrowerkzeugen 1 Verwendung finden, sondern kann auch in sonstigen Elektrogeräten, wie Elektrohaushaltsgeräten, Elektrogartengeräten, Werkzeugmaschinen, Steuergeräten o. dgl. vorteilhaft eingesetzt werden.

### Bezugszeichen-Liste:

- 1:: Elektrowerkzeug
- 2:: Gehäuse (von Elektrowerkzeug)
- 3:: Handgriff
- 4:: Elektromotor
- 5:: Werkzeug
- 6:: Werkzeugaufnahme
- 7:: Einrichtung zur Ansteuerung von Elektromotor / Ansteuereinrichtung
- 8:: Elektronikmodul
- 9:: Leistungsschaltung
- 10:: Steuerschaltung
- 11:: Leistungshalbleiter
- 12:: Schaltmodul
- 13:: Betätigungsorgan
- 14:: Stößel
- 15:: Sollwertgeber
- 16:: Träger
- 17:: Aufnahme (am Träger)
- 18,19:: Leiterplatte (für Elektronikmodul)
- 20:: Abstandhalter
- 21:: Kühlkörper
- 22:: Halteklammer
- 23:: Bohrung (im Träger)
- 24:: (weitere) Aufnahme (am Träger)
- 25:: (elektrischer) Anschluß
- 26:: Leiterplatte (von Sollwertgeber)
- 27:: Kontaktfläche (für Sollwertgeber)
- 28:: Kontaktfläche (für Rechts-/Links-Stellung)
- 29:: Schleifer
- 30:: Umschalthebel
- 31:: Rechts-/Links-Schieber
- 32:: Energiespeicher / Akku
- 33:: Kontaktbrücke
- 34:: Lasche

## Patentansprüche

1. Einrichtung zur Ansteuerung eines Elektromotors (4), insbesondere eines bürstenlosen Gleichstrommotors, beispielsweise in einem Akku-Elektrowerkzeug, mit einem Elektronikmodul (8) umfassend eine Leistungsschaltung (9) mit wenigstens einem Leistungshalbleiter (11) zum steuerbaren Anlegen einer elektrischen Spannung an den Elektromotor (4) sowie eine Steuerschaltung (10) zur Steuerung der Leistungsschaltung (9) und/oder des Leistungshalbleiters (11), derart daß der Elektromotor (4) mit einer einstellbaren Drehzahl oder einem einstellbaren Drehmoment betreibbar ist, und mit einem ein verstellbares Betätigungsorgan (13) aufweisendes Schaltmodul (12) zum Ein- und/oder Ausschalten der Steuerschaltung (10) für den Betrieb des Elektromotors (4), wobei das Elektronikmodul (8) sowie das Schaltmodul (12) als jeweils separate Komponenten ausgestaltet sind, und wobei das Elektronikmodul (8) sowie das Schaltmodul (12) auf einem Träger (16) angeordnet sind, derart daß das Elektronikmodul (8) sowie das Schaltmodul (12) zueinander positionierbar sind und eine Baugruppe bilden, **dadurch gekennzeichnet, daß** das Elektronikmodul (8) zwei mittels Abstandhalter (20) paketartig, übereinander angeordnete Leiterplatten (18, 19) für die Steuerschaltung (10) sowie für die Leistungsschaltung (9) umfaßt.

2. Einrichtung zur Ansteuerung eines Elektromotors (4) nach Anspruch 1, **dadurch gekennzeichnet, daß** das Schaltmodul (12) einen Sollwertgeber (15) zur Drehzahleinstellung oder zur Drehmomenteinstellung aufweist, wobei der Sollwertgeber (15) eine Sollwertvorgabe in Abhängigkeit von der Stellung des Betätigungsorgans (13) erzeugt, daß vorzugsweise die Sollwertvorgabe des Sollwertgebers (15) in der Art einer digitalen Wegabfrage aus zur Stellung des Betätigungsorgans (13) korrespondierenden Digitalwerten besteht, und daß weiter vorzugsweise die Digitalwerte des Sollwertgebers (15) der Steuerschaltung (10), insbesondere einem Mikroprozessor oder einem Mikrocontroller im Elektronikmodul (8), zur weiteren Verarbeitung zugeführt werden.

3. Einrichtung zur Ansteuerung eines Elektromotors (4) nach Anspruch 1 oder 2, **dadurch gekennzeichnet, daß** der Träger (16) eine Aufnahme (17) für das Elektronikmodul (8) aufweist, daß vorzugsweise die Leiterplatte (18) für die Steuerschaltung (10) dem Träger (16) zugewandt in der Aufnahme (17) angeordnet ist, und daß weiter vorzugsweise die Steuerschaltung (10) in der Aufnahme (17) mittels einer Vergußmasse vergießbar ist.

4. Einrichtung zur Ansteuerung eines Elektromotors (4) nach Anspruch 3, **dadurch gekennzeichnet, daß** die Leiterplatte (19) für die Leistungsschaltung (9) dem Träger (16) abgewandt in der Aufnahme (17) angeordnet ist, daß vorzugsweise die Leistungsschaltung (9) frei von Vergußmasse ist, daß weiter vorzugsweise ein Kühlkörper (21) an der Leistungsschaltung (9), insbesondere in wärmeleitendem Kontakt mit dem Leistungshalbleiter (11), angeordnet ist, und daß noch weiter vorzugsweise der Kühlkörper (21) mittels einer Halteklammer (22) am Träger (16) befestigt ist.

5. Einrichtung zur Ansteuerung eines Elektromotors (4) nach einem der Ansprüche 1 bis 4, **dadurch gekennzeichnet, daß** Bohrungen (23), Löcher oder Durchbrüche am Träger (16) zur Befestigung des Schaltmoduls (12) angeordnet sind, derart daß das Schaltmodul (12) zum Elektronikmodul (8) positionierbar ist, daß vorzugsweise der Träger (16) eine weitere Aufnahme (24) für den Anschluß (25) für die Spannungsversorgung, insbesondere für den Anschluß (25) zu einem Akku (32), beispielsweise in der Art eines Tulpenadapters oder eines Steckadapters, aufweist, derart daß der Anschluß (25) zum Elektronikmodul (8) und/oder zum Schaltmodul (12) positionierbar ist, und daß weiter vorzugsweise der Anschluß (25) mit dem Elektronikmodul (8) und/oder dem Schaltmodul (12) in elektrischer Verbindung steht.

6. Einrichtung zur Ansteuerung eines Elektromotors (4) nach einem der Ansprüche 2 bis 5, **dadurch gekennzeichnet, daß** der Sollwertgeber (15) eine Leiterplatte (26) mit zu den Digitalwerten der Sollwertvorgabe korrespondierenden Kontaktflächen (27) aufweist, daß vorzugsweise ein mit dem Betätigungsorgan (13) in Wirkverbindung stehender Schleifer (29), insbesondere ein 5-Finger-Schleifer, die jeweiligen Kontaktflächen (27) entsprechend der Stellung des Betätigungsorgans (13) kontaktiert, daß weiter vorzugsweise zwei weitere Kontaktflächen (28) auf der Leiterplatte (26) das Signal für die Rechts-/Links-Funktion des Elektromotors (4) erzeugen, und daß noch weiter vorzugsweise eine mit einem Umschalthebel (30) am Schaltmodul (12) in Wirkverbindung stehende Kontaktbrücke (33) die jeweilige weitere Kontaktfläche (28) entsprechend der Rechts-/Links-Stellung kontaktiert.

7. Einrichtung zur Ansteuerung eines Elektromotors (4) nach einem der Ansprüche 1 bis 6, **dadurch gekennzeichnet, daß** das Elektronikmodul (8) eine Überwachungsschaltung zur Überwachung der Temperatur oder des Stromes enthält, derart daß bei einer Übertemperatur oder eines Überstromes der Betrieb des Elektromotors (4) abschaltbar ist, und daß vorzugsweise ein Leuchtmittel, wie eine LED, zur Anzeige einer Übertemperatur oder einer Unterspannung mit der Überwachungsschaltung in elektrischer Verbindung steht.

## Claims

1. Device for driving an electric motor (4), in particular a brushless DC motor, for example in a cordless power tool with an electronic module (8) comprising a power circuit (9) with at least one power semiconductor (11) for controllably applying an electric voltage to the electric motor (4) and a control circuit (10) for controlling the power circuit (9) and/or the power semiconductor (11), so that the electric motor (4) is operable with an adjustable speed or an adjustable torque, and with a switching module (12) comprising an adjustable actuating member (13) for switching on and/or off the control circuit (10) for the operation of the electric motor (4), wherein the electronic module (8) and the switching module (12) are each configured as separate components, and wherein the electronic module (8) and the switching module (12) are arranged on a support (16) so that the electronic module (8) and the switching module (12) are positionable with respect to each other, and form an assembly,
**characterized in that**
the electronic module (8) has two circuit boards (18, 19) for the control circuit (10) and for the power circuit (9) stacked above one another by means of spacers (20) in a package-like arrangement.

2. Device for driving an electric motor (4) according to claim 1,
**characterized in that**
the switching module (12) comprises a setpoint generator (15) for setting the speed or the torque, wherein the setpoint generator (15) has a setpoint input that is generated as a function of the position of the actuating member (13), wherein preferably the set value of the setpoint generator (15) is in the form of digital values corresponding to a digital path detection of the position of the actuating member (13), and wherein preferably the digital values of the setpoint generator (15) are fed to the control circuit (10), in particular a microprocessor or microcontroller, in the electronic module (8) for further processing.

3. Device for driving an electric motor (4) according to claim 1 or 2,
**characterized in that**
the carrier (16) comprises a receptacle (17) for the electronic module (8), and wherein the circuit board (18) for the control circuit (10) is preferably arranged in the receptacle (17) to face the support (16), and wherein further the control circuit (10) is castable in the receptacle (17), preferably by means of a potting compound.

4. Device for driving an electric motor (4) according to claim 3,
**characterized in that**
the circuit board (19) for the power circuit (9) is arranged in the receptacle (17) to face away from the support (16), wherein preferably the power circuit (9) is free of potting compound, and wherein preferably a heat sink (21) is arranged on the power circuit (9), in particular in thermally-conductive contact with the power semiconductor (11), and wherein preferably the heat sink (21) is secured on the support (16) by a retaining clip (22).

5. Device for driving an electric motor (4) according to any one of the claims 1 to 4,
**characterized in that**
bores (23), holes or perforations are arranged in the support (16) to mount the switching module (12) in such a way that the switching module (12) is positionable on the electronic module (8), wherein preferably the support (16) comprises a further receptacle (24) for the connection (25) to the voltage supply, in particular for the connection (25) to a battery (32), for example in the manner of a tulip glass adapter or a plug-in adapter, so that the connection (25) is positionable with respect to the electronic module (8) and/or the switching module (12), and wherein preferably the connection (25) is electrically connected to the electronic module (8) and/or the switching module (12).

6. Device for driving an electric motor (4) according to one of the claims 2 to 5,
**characterized in that**
the setpoint generator (15) comprises a circuit board (26) with contact surfaces (27) corresponding to the digital values of the setpoint, wherein preferably a sliding contact (29) is in operative connection with the actuating member (13), in particular a 5-finger sliding contact which contacts respective contact surfaces (27) corresponding to the position of the actuating member (13), and wherein preferably two further contact surfaces (28) on the circuit board (26) generate the signal for the right/left function of the electric motor (4), and wherein further preferably a contact bridge (33) is in operative contact with a switching lever (30) on the switching module (12), which contacts respective further contact surfaces (28) corresponding to the right/left position.

7. Device for driving an electric motor (4) according to one of the claims 1 to 6;
**characterized in that**
the electronic module (8) contains a monitoring circuit for monitoring the temperature or current in such a way that upon the occurrence of an excess temperature or overcurrent, the operation of the electric motor (4) is switched off, and wherein preferably a light source, such as an LED, is in electrical communication with the monitoring circuit to indicate an over-temperature or under-voltage.

## Revendications

1. Dispositif de commande d'un moteur électrique (4), plus particulièrement d'un moteur à courant continu sans balais, par exemple dans un outil électrique à accumulateur, avec un module électronique (8) comprenant un circuit de puissance (9) avec au moins un semi-conducteur de puissance (11) pour l'application contrôlable d'une tension électrique au moteur électrique (4) ainsi qu'un circuit de commande (10) pour la commande du circuit de puissance (9) et/ou du semi-conducteur de puissance (11), de façon à ce que le moteur électrique (4) puisse être utilisé avec une vitesse de rotation réglable ou un moment de rotation réglable, et avec un module de commutation (12) comprenant un organe d'actionnement réglable (13) pour la mise en marche et/ou l'arrêt du circuit de commande (10) pour le fonctionnement du moteur électrique (4), le module électronique (8) ainsi que le module de commutation (12) étant conçus comme des composants séparés et le module électronique (8) ainsi que le module de commutation (12) étant disposés sur un support (16), de façon à ce que le module électronique (8) ainsi que le module de commutation (12) puissent être positionnés l'un par rapport à l'autre et forment un sous-ensemble, **caractérisé en ce que** le module électronique (8) comprend deux circuits imprimés (18, 19) disposés l'un sur l'autre sous la forme d'un paquet au moyen d'entretoises (20), pour le circuit de commande (10) ainsi que pour le circuit de puissance (9).

2. Dispositif de commande d'un moteur électrique (4) selon la revendication 1, **caractérisé en ce que** le module de commutation (12) comprend un générateur de valeur de consigne (15) pour le réglage de la vitesse de rotation ou pour le réglage du moment de rotation, le générateur de valeur de consigne (15) générant une valeur de consigne en fonction de la position de l'organe d'actionnement (13), **en ce que**, de préférence, la valeur de consigne du générateur de valeur de consigne (15) soit constituée, à la manière d'une demande de trajet numérique, de valeurs numériques correspondant à la position de l'organe d'actionnement (13) et **en ce que**, de préférence, les valeurs numériques du générateur de valeur de consigne (15) du circuit de commande (10) sont introduite plus particulièrement dans un microprocesseur ou dans un microcontrôleur dans le module électronique (8), pour un traitement ultérieur.

3. Dispositif de commande d'un moteur électrique (4) selon la revendication 1 ou 2, **caractérisé en ce que** le support (16) comprend un logement (17) pour le module électronique (8), **en ce que** de préférence le circuit imprimé (18) pour le circuit de commande (10) est disposé dans le logement (17) de façon à être orienté vers le support (16) et **en ce que**, de préférence, le circuit de commande (10) peut être scellé dans le logement (17) au moyen d'une masse de scellement.

4. Dispositif de commande d'un moteur électrique (4) selon la revendication 3, **caractérisé en ce que** le circuit imprimé (19) pour le circuit de puissance (9) est disposé dans le logement (17) de façon à être orienté du côté opposé au support (16), **en ce que** de préférence le circuit de puissance (9) est exempt de masse de scellement, **en ce que** de préférence un corps de refroidissement (21) est disposé sur le circuit de puissance (9), plus particulièrement avec un contact de conduction thermique avec le semi-conducteur de puissance (11) et **en ce que** de préférence le corps de de refroidissement (21) est fixé au support (16) au moyen d'une pince de retenue (22).

5. Dispositif de commande d'un moteur électrique (4) selon l'une des revendications 1 à 4, **caractérisé en ce que** des alésages (23), des trous ou des passages sont disposés sur le support (16) pour la fixation du module de commutation (12), de façon à ce que le module de commutation (12) puisse être positionné par rapport au module électronique (8), **en ce que** de préférence le support (16) comprend un autre logement (24) pour le raccordement (25) pour l'alimentation en tension, plus particulièrement pour le raccordement (25) à un accumulateur (32), par exemple à la manière d'un adaptateur en forme de tulipe ou d'un adaptateur enfichable, de façon à ce que le raccordement (25) puisse être positionné par rapport au module électronique (8) et/ou au module de commutation (12), et **en ce que** de préférence le raccordement (25) est relié électriquement avec le module électronique (8) et/ou le module de commutation (12).

6. Dispositif de commande d'un moteur électrique (4) selon l'une des revendications 2 à 5, **caractérisé en ce que** le générateur de valeur de consigne (15) comprend un circuit imprimé (26) avec des surfaces de contact (27) correspondant aux valeur numérique de la valeur de consigne, **en ce que** de préférence un curseur (29) en liaison fonctionnelle avec l'organe d'actionnement (13), plus particulièrement un curseur à 5 doigts, met en contact les différentes surfaces de contact (27) en fonction de la position de l'organe d'actionnement (13), **en ce que** de préférence deux autres surfaces de contact (28) sur le circuit imprimé (26) génèrent le signal pour le fonctionnement droite/gauche du moteur électrique (4) et **en ce que** de préférence un pont de contact (33) en liaison fonctionnelle avec un levier de commutation (30) sur le module de commutation (12) entre en contact avec l'autre surface de contact (28) en fonction de la position droite/gauche.

7. Dispositif de commande d'un moteur électrique (4) selon l'une des revendications 1 à 6, **caractérisé en ce que** le module électronique (8) comprend un circuit de surveillance pour la surveillance de la température ou du courant, de façon à ce que, dans le cas d'une température excessive ou d'une surintensité, le fonctionnement du moteur électrique (4) puisse être arrêté et **en ce que** de préférence un moyen d'éclairage, tel qu'une LED, est relié électriquement avec le circuit de surveillance pour l'affichage d'une température excessive ou d'une sous-tension.
